(19) Europäisches Patentamt
European Patent Office
Office européen des brevets

(11) **EP 2 020 597 A1**

(12) **EUROPÄISCHE PATENTANMELDUNG**

(43) Veröffentlichungstag:
04.02.2009 Patentblatt 2009/06

(51) Int Cl.:
*G01N 31/22* (2006.01)    *G01N 21/64* (2006.01)

(21) Anmeldenummer: 07113709.5

(22) Anmeldetag: 02.08.2007

(84) Benannte Vertragsstaaten:
AT BE BG CH CY CZ DE DK EE ES FI FR GB GR HU IE IS IT LI LT LU LV MC MT NL PL PT RO SE SI SK TR
Benannte Erstreckungsstaaten:
AL BA HR MK RS

(71) Anmelder: Mettler-Toledo AG
8606 Greifensee (CH)

(72) Erfinder: Thrier, Rolf
8317, Tagelwangen (CH)

(54) **Optochemischer Sensor**

(57) Die Erfindung betrifft einen optochemischen Sensor 9 zur Messung von gasförmigen oder gelösten Analyten, insbesondere Sauerstoff. Der Sensor 9 umfasst ein in einer Polymermatrix 23 immobilisiertes Fluorophor 25, wobei die Polymermatrix 23 aus einem Polymer mit einem nicht-aromatischen Rückgrat gebildet wird. Die Erfindung betrifft auch ein Herstellungsverfahren des Sensors 9, bei welchem der Fluorophor 25 direkt zur Polymerschmelze zugegeben wird.

Fig.2

EP 2 020 597 A1

**Beschreibung**

Die vorliegende Erfindung betrifft optochemische Sensoren zur Messung gasförmiger oder gelöster Analyten, deren Verwendung sowie ein Verfahren zu deren Herstellung.

Die Bestimmung der Konzentration gasförmiger oder gelöster Analyten ist in einer Vielzahl von Anwendungen und Vorgängen notwendig. Beispielsweise ist die Überwachung der Sauerstoffkonzentration in biotechnologischen Prozessen für die Steuerung der Prozesse unerlässlich. Dies gilt auch für eine Reihe weiterer Analyten, z.B. $CO_2$, $SO_2$, $H_2O_2$ oder Stickoxid.

Von den existierenden Methoden zur Messung von solchen Analyten haben einige den Nachteil, dass sie die Konzentration des Analyten während der Messung verändern, da dieser für die Messung verbraucht wird. Als Alternative zu solchen Messmethoden wurden in jüngerer Zeit optochemische Messverfahren entwickelt. Diese Verfahren basieren auf einem Sensor, dessen Eigenschaften sich in Abhängigkeit von der Menge des anwesenden Analyten ändern. Eine solche Eigenschaft ist die Fluoreszenz derartiger optochemischer Sensoren, die durch den Analyten entweder verstärkt oder gequencht werden kann.

In US 6,432,363 wird ein optochemischer Sensor beschrieben, der einen lumineszierenden Farbstoff, immobilisert in einer Polymermatrix, enthält. Die Polymermatrix ist frei von Weichmachern und umfasst mindestens ein Polymer mit Phenylgruppen in der Hauptkette.

WO 95/26501 offenbart einen optischen Sensor zur Bestimmung von Ionen in wässrigen Lösungen. Der Sensor enthält einen transparenten Träger, der mit einer aus einem hydrophoben Polymer mit einer Glasübergangstemperatur (Tg) im Bereich von - 150°C bis 50°C umfassenden Beschichtung versehen ist. Das Fluorophor ist dabei in dieser Beschichtung immobilisiert.

Y. Amao et al. (Analytica Chimica Acta 407 (2000) 41-44) beschreiben einen Fluoreszenz-basierten Sauerstoff-Sensor, in welchem ein Al-Phtalocyanin-Fluorophor immobilisiert in einem Polystyrene-Film Anwendung findet.

Y. Amao et al. (Analytica Chimica Acta 421 (2000) 167-174) beschreiben die Sauerstoffmessung unter Ausnutzung von Lumineszenz-Änderungen von Metalloporphyrinen, die in einem Poly(isobutylmethacrylat-co-trifluoromethacrylat)-Film immobilisiert sind.

Y. Amao et al. (Analytica Chimica Acta 445 (2001) 177-182) beschreiben einen lumineszierenden Iridium (III)-Komplex, immobilisert in einem Fluoropolymer-Film, als Material zur optischen Sauerstoff-Bestimmung.

In M. Florescu, A. Katerkamp (Sensors and Actuators B 97 (2004) 39-44) wird die Optimierung von Polymer-Membranen zur optischen Sauerstoffmessung beschrieben. Als Fluorophor wurde ein Ruthenium-Metall-Komplex (Ru $(dpp)_3Cl_2$) verwendet.

Als Nachteil der beschriebenen optochemischen Sensoren erweist sich oft ihre eher geringe Stabilität gegenüber Reinigungsprozessen wie Sterilisieren, z.B. in der Prozessanlage, Autoklavieren, CIP-Behandlungen (**C**lean **I**n **P**lace) und auch die ungenügende Stabilität in Prozessmedien, die polare organische Lösungsmittel enthalten. Aber gerade bei Sensoren, die im biotechnologischen Bereich eingesetzt werden, sind das Reinigen, Autoklavieren und CIP-Behandlungen der mit Sensoren versehenen Messvorrichtungen wichtig. Die mit dem Sterilisieren bzw. Autoklavieren einhergehenden hohen Temperaturen bewirken oft einen Verlust an immobilisierten Fluorophoren, z.B. durch thermische Zersetzung des Fluorophors (Ausbleichen) sowie durch Auswaschen des Fluorophors aus der Matrix. Vor allem bei Polymeren mit niedriger Glasumwandlungstemperatur führen die hohen Temperaturen zu erhöhter Beweglichkeit der Polymerketten im Polymer und somit zu einer erhöhten Diffusion des Fluorophors durch die Polymermatrix und damit zu erhöhtem Auswaschen. Zudem weisen insbesondere die in US 6,432,363 genannten Polymermatrizen aufgrund des aromatischen Charakters des Polymerrückgrats eine Eigenfarbe auf, welche ihre optische Durchlässigkeit und damit die Messung der Fluoreszenz erschwert. Eine solche Eigenfarbe kann auch durch Alterungsprozesse (Temperatur, Feuchte) entstehen, die beispielsweise zu einer Vergilbung der Polymermatrix führen.

Der Begriff Stabilität umfasst verschiedene Aspekte. Der optochemische Sensor ist stabil, wenn erstens der Fluorophor die Temperaturen aushält und nicht thermisch ausbleicht, zweitens der Fluorophor bei Alterung (Einsatz im Prozess, CIP-Prozess, Autoklavieren) nicht auswäscht, drittens das Polymer seine optischen und mechanischen Eigenschaften im Laufe der Zeit nicht ändert (Vergilbung, Versprödung etc.), viertens das Polymer bzw. die Polymermatrix interferierende Stoffe (Wasser, Ionen, Lösungsmittel) auch nach Alterung zurückhält und fünftens die Konzentration des Fluorophors und die Stern-Vollmer-Charakteristik konstant bleiben, das Polymer bzw. die Polymermatrix also nicht quillt oder sich durch das Prozessmedium auflöst (Lösungsmittelstabilität).

Aufgabe der vorliegenden Erfindung ist es, einen optochemischen Sensor zur Verfügung zu stellen, der eine hohe Stabilität gegenüber Reinigungsprozessen und Prozessmedien und damit eine lange Lebensdauer sowie eine geringe durch die Polymermatrix hervorgerufene Eigenfarbe aufweist. Zudem soll dadurch auch eine wirtschaftliche Alternative zu den kommerziell erhältlichen optochemischen Sensoren zur Verfügung gestellt werden.

Die Aufgabe wird durch einen optochemischen Sensor und ein Verfahren zu seiner Herstellung gemäss den unabhängigen Ansprüchen gelöst. Weitere bevorzugte Ausführungsformen sind Gegenstand der abhängigen Ansprüche.

Ein erfindungsgemässer optochemischer Sensor umfasst ein Fluorophor, das in einer Polymermatrix immobilisiert ist. Das Polymer, welches zur Bildung der Polymermatrix verwendet wird, weist ein nicht-aromatisches Rückgrat auf. Bevorzugte Schichtdicken der Polymermatrix sind im Bereich von 3 - 10 $\mu$m.

Mit "Rückgrat" wird die Hauptkette des Polymers bezeichnet. Das heisst, dass lediglich die Hauptkette des Polymers nicht-aromatisch ist. Seitenketten oder Seitengruppen können auch aromatische Komponenten aufweisen.

Mit "Analyt" wird die zu messende Substanz, z.B. Sauerstoff, bezeichnet.

Durch das nicht-aromatische Rückgrat kann die Eigenfarbe der Polymermatrix auf ein geringes Mass reduziert und eine möglichst gute Lichtdurchlässigkeit erzielt werden. Folgende Polymere können für die Bildung der Polymermatrix erfindungsgemässer optochemischer Sensoren eingesetzt werden, Poly(4-methyl-1-penten), Ethylen-Norbornen Copolymer, cyclische Olefin-Copolymere, cyclische Olefin Polymere, Poly(n-methylmethacrylimide), Poly(N-Vinylphthalimid), Poly(2-Vinylthiophen), Poly(pentachlorophenyl methacrylat), Poly(pentachlorophenyl methacrylate-co-glycidyl methacrylat) 10mol% Glycidyl methacrylat, Poly(pentabromophenyl acrylat), Poly(pentabromophenyl acrylate-co-glycidyl methacrylat) 10mol% Glycidyl methacrylat, Poly(pentabromobenzyl acrylat), Poly(pentabromobenzyl methacrylat), Poly(pentabromobenzyl methacrylate-co-glycidyl methacrylat) 10mol% Glycidyl methacrylat, Poly(4-Vinylpyridin), Poly(2,6-dichlorostyren), Poly(1-naphthyl methacrylat), Poly((octahydro-5-(methoxycarbonyl)-5-methyl-4,7-methano-1H-indene-1,3-diyl)-1,2-ethanediyl), Poly(4-Vinylbiphenyl), Poly(4-vinylphenol). Es ist auch möglich, Mischungen dieser Polymere einzusetzen. Der Polymerisationsgrad sollte möglichst hoch sein, um eine möglichst hohe Glasumwandlungstemperatur zu gewährleisten.

Die Wahl des Fluorophors hängt von dem zu messenden Analyten ab. Geeignet sind Fluorophore, deren Fluoreszenz in Abhängigkeit von der Menge des in der Probe anwesenden Analyten eine möglichst grosse Differenz aufweist, z.B. das Fluorophor Pt(II) meso-Tetra(pentafluorophenyl) porphin. Zahlreiche weitere Fluorophore sind ebenfalls kommerziell erhältlich.

Die erfindungsgemässen optochemischen Sensoren zeigen eine ausgezeichnete Beständigkeit gegenüber Reinigungs-prozessen, z.B. Autoklavieren (30 min. bei 130°C, Wasserdampfatmosphäre) oder einer CIP-Behandlung (30 - 60 min. mit 3%-iger NaOH-Lösung bei 90°C).

In einer bevorzugten Ausführungsform wird das Polymer aus Poly(4-methyl-1-penten) und Ethylen-Norbornen Copolymeren ausgewählt. Letztere sind kommerziell unter dem Namen Topas erhältlich.

Diese beiden Polymere sind als Polymermatrizen zur Immobilisierung von Fluorophoren für autoklavierbare optochemische Sensoren, insbesondere Sauerstoffsensoren, aufgrund ihrer untenstehenden Eigenschaft besonders gut geeignet.

Sie weisen eine sehr gute optische Transparenz auf (d.h. Licht muss durch die Polymermembran zum Fluorophor gelangen, um diesen anzuregen). Die optische Transparenz (gemäss ISO 13468-2) für Topas liegt bei ca. 91 % (Typen: 5013X25 Tg = 134 °C; 6013S-04 Tg = 138 °C; 6015S-04 Tg = 158 °C; 6017S-04 Tg = 178 °C; 5013S-04 Tg = 134°C; TKX-0001 Tg = 134°C). Alternativ wird für die optischen Topas-Grade der "Haze" nach ISO 14782 angegeben. Dieser beträgt für die Topas-Qualitäten < 1% (Typen: 5013X14 Tg = 136°C; 6013F-04 Tg = 140°C).

Sie besitzen eine gute Lichtbeständigkeit, d.h. die optische Transparenz der Polymermatrix bleibt gewährleistet, auch nach Belichtung der Folie mit (Sonnen-)Licht und insbesondere mit Licht, das zur Anregung für das Fluorophor verwendet wird. Dieses Anregungslicht befindet sich meist im nahen UV-Bereich von 200-520 nm.

Sie weisen auch eine sehr hohe Beständigkeit gegenüber Gamma-Strahlung und Gammasterilisation sowie gegenüber Sterilisation mit Ethylenoxid auf. Dies sind häufig eingesetzte Methoden zur Sterilisation. Die optochemischen Sensoren, insbesondere die Polymermatrizen, dürfen dabei weder vergilben noch andere Schäden nehmen (z.B. verspröden, hydrophilisieren, Polymerabbau bzw. Abbau der Kettenlängen, unkontrollierte Polymervernetzung etc.).

Im Weiteren sind Polymermatrizen aus Poly(4-methyl-1-penten) oder Ethylen-Norbornen Copolymeren auch beständig gegenüber Dampfsterilisation (130°C in Wasserdampf-atmosphäre).

Die bevorzugten Polymermatrizen besitzen eine hohe Sauerstoffpermeation (250 cm$^3$*100$\mu$m/(m$^2$*Tag*bar) für Topas 5013X14 Tg = 136°C und 280 cm$^3$*100$\mu$m/(m$^2$*Tag*bar) für Topas 6013F-04 bei 23°C 50% rel. Feuchte) (gemäss ASTM D3985).Dadurch weisen die erfindungsgemässen optochemischen Sensoren schnelle Ansprechzeiten auf.

Im Weiteren zeigen die bevorzugten Polymermatrizen eine nur geringe Wasseraufnahme und Quellneigung für polare Lösungsmittel wie Aceton oder Isopropanol. Dies ist deshalb vorteilhaft, da Wasser und Lösungsmittel in der Matrix stören und zu nicht linearen Stern-Vollmer-Plots führt. Ferner ist mit zunehmender Wasseraufnahme auch mit Diffusion von Ionen in die Polymermatrix zu rechnen, was aus Gründen der Interferenz letzterer dringend zu vermeiden ist. Zudem führt eine Aufnahme von Wasser oder Lösungsmittel auch zu einer unerwünschten Quellung der Polymermatrix, was letztlich die Fluorophorkonzentration im Polymer bzw. der Polymermatrix beeinflusst und die Messung ungenauer macht. Die Polymermatrix hat also auch Membranfunktion, indem sie für den Analyten, z.B. Sauerstoff, permeabel ist, Wasser, Lösungsmittel und Ionen aber zurückhhält.

Für Topas (Ethylen-Norbornen Copolymere) werden die folgende Wasseraufnahme und die folgende Wasserdampfpermeation angegeben:

Wasseraufnahme(nach ISO 62):

0.01% (alle Topas-Typen)

0.01% (Poly(4-methyl-1-penten) (PMP))

Wasserdampfpermeation (38°C, 90% rel. Feuchte):

1.0 g*100$\mu$m/(m$^{2*}$Tag) (Topas Typ 5013X14)

1.3 g*1 00$\mu$m/(m$^{2*}$Tag) (Topas Typ 6013F-04)

Gängige Polymermatrizen, die zur Immobilisierung von Fluorophoren verwendet werden, weisen wesentlich höhere Wasseraufnahmen auf, z.B. Polyetherimide (PEI) 0.25%, PSU 0.24% und Polyethersulphon 0.4%.

Die bevorzugten Polymermatrizen weisen ausserdem eine gute Löslichkeit für die Fluorophore auf. Das heisst, es löst sich eine genügend grosse Konzentration im Polymer, um eine gute Fluoreszenzantwort bei dünnen Filmen (Ansprechzeit) zu erhalten.

Weitere geeignete Polymere sind cyclische Olefin Polymere oder Poly(n-methylmethacrylimide) ausgewählt, welche kommerziell unter den Namen Zeonex oder Zeonor bzw. Pleximid erhältlich sind.

Für diese drei Polymere werden die folgenden Eigenschaften angegeben:

| | Zeonex | Zeonor | Pleximid |
|---|---|---|---|
| optische Transparenz [%] | 92 | 92 ( bei 3mm Dicke) | 90 |
| Wasseraufnahme [%] | <0.01 | <0.01 | 0.4 |
| Glasübergangstemperatur [°C] | 70-163 | 70-163 | 172 |
| Sauerstoffpermeabilität [cm$^3$*cm/(cm$^2$*s*cmHg)] | | ca. 1*10$^{-3}$ ca. | |
| Wasserdampfpermeation 40°C 90% rel. Feuchte [g*100$\mu$m/(m$^2$*Tag)] | 1-2.5 | ca. 1 | |

Die Glasübergangstemperatur von Zeonex und Zeonor ist je nach tatsächlicher Zusammensetzung der Polymere einstellbar ist.

Für die Filmbildung aus Lösung ist es vorteilhaft, dass das Polymer in einem geeigneten Lösungsmittel mit hohem Dampfdruck löslich ist. Es ist wichtig, dass sich das gewählte Fluorophor ebenfalls in genügender Konzentration in demselben Lösungsmittel löst, um eine gleichmässig Verteilung in der Polymermatrix zu erreichen. Mögliche Lösungsmittel für die erfindungsgemässen Polymermatrizen sind Chloroform und Cyclohexan.

In einer besonders bevorzugten Ausführungsform des erfindungsgemässen optochemischen Sensors umfasst die Polymermatrix Ethylen-Norbornen Copolymere.

Die besonderes bevorzugten Ethylen-Norbornen Copolymere (Cyclische Olefin-Copolymere, COC) weisen hohe Glasübergangstemperaturen auf. Mit Glasübergangstemperaturen, die höher liegen als die beim Autoklavieren üblicherweise gewählten 130°C wird verhindert, dass die Polymerseitenketten während eines Autoklavierzyklus beweglich werden und der Fluorophor aus der Matrix diffundieren kann. Dadurch wird ein Verlust des Fluorophors praktisch vermieden, was eine hohe Lebensdauer des erfindungsgemässen Sensors bewirkt. Durch die Variation des Norbornen-Anteils im Copolymer kann zudem die Glasübergangstemperatur beeinflusst und damit dem gewünschten Zweck angepasst werden.

In weiteren bevorzugten Ausführungsformen des optochemischen Sensors umfasst die Polymermatrix cyclische Olefin Polymere (Zeonex, Zeonor; COP) oder Poly(n-nethylmethacrylimid).

In einer weiteren bevorzugten Ausführungsform ist die Polymermatrix auf einem Träger aufgebracht. Dadurch weist der optochemische Sensor eine sehr gute Widerstandsfähigkeit gegenüber mechanischen Belastungen, z.B. erhöhte Drücke oder Druckschwankungen in Bioreaktoren, auf.

Bevorzugte Materialien, aus welchen Träger hergestellt werden können, sind Polyester, amorphe oder teilkristalliene Polyamide, Acrylat, Polycarbonat, COC-Polymere (Topas), COP-Polymere (Zeonor, Zeonex), Poly(n-methylmethacrylimid) und Glas. COC-Polymere sind unter dem Namen Topas (Ticona-Polymer), COP-Polymere unter den Markennamen Zeonor oder Zeonex (Zeon Chemicals) und Poly(n-methylmethacrylimid) unter dem Namen Pleximid (Röm GmbH) erhältlich. Die Ethylen-Norbornen Copolymere (Cyclische Olefin-Copolymere, COC) sind als Material für den Träger besonders bevorzugt, da sie eine sehr gute optische Transparenz aufweisen. In einer weiteren bevorzugten Ausführungsform weist die Polymermatrix eine Deckschicht auf. Diese Deckschicht muss für den Analyten durchlässig, für Licht jedoch undurchlässig sein. Dadurch kann eine Störung der Fluoreszenzmessung durch Fremdlicht oder Fluoreszenz aus der Messprobe vermieden werden. Mögliche Materialien für die Deckschichten sind schwarze, poröse Teflonschichten (Dicke 5 $\mu$m) oder weisse sauerstoffpermeable Siliconschichten oder weisse poröse Papiere.

In einer besonders bevorzugten Ausführungsform ist der Analyt gasförmiger oder gelöster Sauerstoff, z.B. gelöst in wässrigen Lösungen oder Medien oder in Medien, die geringe Anteile an polaren Lösungsmitteln enthalten (z.B. Aceton oder Isopropanol), gasförmiges oder gelöstes $SO_2$, gasförmiges oder gelöstes $H_2O_2$, $SO_2$ oder Stickoxid. Gasförmiger oder gelöster Sauerstoff ist besonders bevorzugt.

Ein Verfahren zur Herstellung erfindungsgemässer optochemischer Sensors beinhaltet folgende Schritte:

In einem Schritt a) wird das für die Bildung der Polymermatrix vorgesehene Polymer erhitzt, bis man eine Schmelze erhält. Bevorzugt werden hierzu Polymere eingesetzt, die einen tiefen Schmelzpunkt aufweisen und auch bei tiefen Temperaturen prozessiert werden können.

In einem Schritt b) wird das Fluorophor zu der in Schritt a) gebildeten Schmelze hinzu gegeben. Um eine schnelle und gleichmässige Verteilung des Fluorophors zu erreichen, wird die Schmelze gerührt.

In einem Schritt c) wird die den Fluorophor enthaltenden Schmelze aus Schritt b) zu einem Film verarbeitet und anschliessend abgekühlt. Je nach Anwendung kann der abgekühlte Film noch weiteren Verarbeitungsschritten unterworfen werden. Die Dicke des Films wird vorteilhafterweise möglichst dünn gehalten und soll 25 $\mu$m nicht überschreiten.

Die Schichtdicke beeinflusst zwei wichtige Grössen beim optischen Messen von Analyten mittels Fluoreszenzlöschung. Zum einen bestimmt die Schichtdicke die Emissionsrate bzw. Reflexionsrate und damit die Intensität der Fluoreszenzantwort und zum anderen ist sie massgeblich für die Ansprechzeit des Messsystems.

Das Hinzufügen des Fluorophors direkt zur Polymerschmelze hat den Vorteil, dass der Einsatz von organischen Lösungsmitteln praktisch vermieden werden kann. Dies ist insbesondere bei halogenierten Lösungsmitteln, die eine erhebliche Umweltbelastung darstellen, vorteilhaft. Ausserdem sind keine aufwendigen und teuren Filmbildungsprozesse wie Spin-Coating, Dip-Coating oder Rakelfilmbildungsprozesse notwendig. Filmbildungsprozesse aus Lösungen erlauben im übrigen nur eine beschränkte Losgrösse. Im Gegensatz dazu ermöglicht die Massenproduktion durch Prozessierung aus der Schmelze eine sehr günstige Produktion.

Da zahlreiche der für die Sauerstoffmessung verwendbaren Fluorophore (Ru-Komplexe; Pt-Komplexe) temperaturstabil sind, können diese teilweise auch direkt in Polymerschmelzen eingebracht werden. Dies ist insbesondere dann möglich, wenn das Polymer selbst über einen tiefen Schmelzpunkt verfügt und bei tiefen Temperaturen und insbesondere bei Temperaturen < 250 °C prozessiert (extrudiert) werden kann. Die extrudierten Folien/Polymerstücke können anschliessend durch verstrecken oder mit bekannten Schältechniken aus den Polymermasterbatches (Polymer + in Schmelze gelöstes Fluorophor) in Filme mit gewünschter Schichtdicke weiterverarbeitet werden. Vorzugsweise verwendet man für diese Methode der Immobilisierung Polymere mit hohem MFI (melt flow index), um möglichst niedrigviskose Schmelzen zu erhalten, in denen sich der Fluorophor schnell löst und gleichmässig verteilen lässt. Dies ist vor allem dann wichtig, wenn der Fluorophor in möglichst kurzer Zeit in die Schmelze einzuarbeiten ist, um die Temperaturbelastung des Fluorophors (und thermische Degeneration desselben) möglichst gering zu halten.

Bevorzugt werden für die Filmbildung aus der Schmelze Polymere eingesetzt, die einen ausreichend niedrigen Schmelzpunkt und eine ausreichend geringe Verarbeitungstemperatur aufweisen. Ein Beispiel hierfür ist Poly(4-methyl-1-penten) (PMP). Durch verhältnismässig moderate Verarbeitungstemperaturen und kurze Verarbeitungszeiten können thermische Schäden am eingesetzten Fluorophor vermieden werden.

In einer bevorzugten Ausführungsform wird der Film entweder direkt auf einem Träger gebildet oder nach seiner Bildung auf den Träger aufgebracht. Um einen guten Verbund des Films und des Trägers zu gewährleisten, werden vorteilhafterweise Haftvermittler oder Klebstoffe eingesetzt.

Es ist auch möglich, eine Polymermatrix direkt auf einem Lichtleiter zu applizieren. Interessant ist diese Methode vor allem für die spröden Polymertypen (z.B. PVK), welche nach dem Applizieren mechanisch möglichst nicht mehr belastet und damit beispielsweise durch Absplittern beschädigt werden dürfen. Dies ist vor allem für PVK aber auch für einige der Fluka-Lichtleiter möglich.

In einer weiteren bevorzugten Ausführungsform wird der Sauerstoffsensitive Polymerfilm direkt auf Glaslichtleitern angeordnet. Insbesondere in Frage kommen all jene Polymere, die in jüngster Zeit als polymere Lichtwellenleiter mit hohem Brechungsindex entwickelt wurden. Zu diesen gehört z.B. das in Chloroform lösliche Poly(pentabromophenyl acrylate - co -glycidyl methacrylate).

Es zeigen rein schematisch:

Fig. 1    eine optochemische Messvorrichtung mit einem erfindungsgemässen Sensor;

Fig. 2    einen optochemischen Sensor als Teilvergrösserung von Figur 1;

Fig. 3     eine bevorzugte Ausführungsform des optochemischen Sensors.

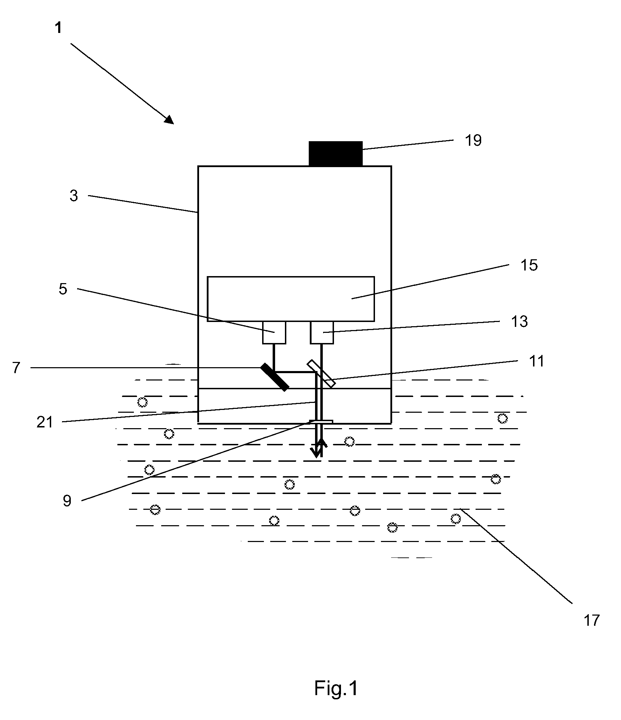

Figur 1 zeigt den Aufbau einer optochemischen Messvorrichtung 1 mit einem erfindungsgemässen Sensor 9. Die Messvorrichtung 1 umfasst ein Gehäuse 3, in dem eine Strahlungsquelle 5, beispielsweise eine LED, ein Spiegel 7, ein optochemischer Sensor 9, ein Strahlteiler oder Filter 11, ein Detektor 13 und eine Messelektronik 15 angeordnet sind. Die von der Strahlungsquelle 5 emittierte Strahlung (Anregungslicht) wird vom Spiegel 7 auf den Strahlteiler 11 und von diesem auf den optochemischen Sensor 9 gelenkt. Der optochemische Sensor 9 steht mit dem Medium 17, das den zu messenden Analyten enthält, in Kontakt. Die vom optochemischen Sensor 9 emittierte Fluoreszenzstrahlung passiert den Strahlteiler 11 ohne Ablenkung und trifft auf den Detektor 13, dessen Signal von der Messelektronik 15 verarbeitet und über einen Transmitter oder eine Schnittstelle 19 weitergeleitet wird. Der Strahlengang 21 ist lediglich schematisch angedeutet.

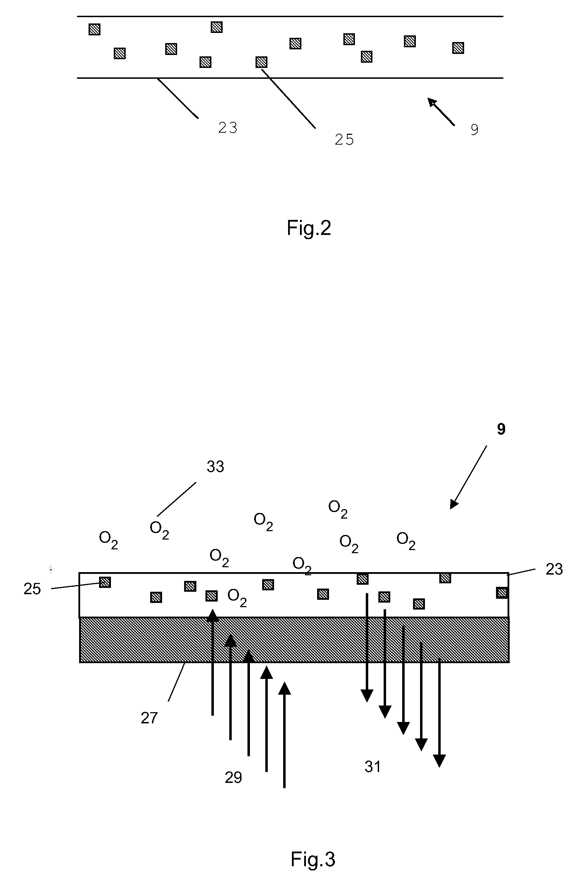

Figur 2 zeigt in einer Teilvergrösserung der optochemischen Messvorrichtung 1 den optochemischen Sensor 9 in seiner einfachsten Ausführungsform. Er umfasst eine Polymermatrix 23 und ein darin immobilisiertes Fluorophor 25.

Figur 3 zeigt eine bevorzugte Ausführungsform des optochemischen Sensors 9 der optochemischen Messvorrichtung 1. Die Polymermatrix 23 mit dem darin immobilisierten Fluorophor 25 ist auf einem Träger 27 angeordnet. Dieser Träger verleiht der Membran 9 die nötige mechanische Stabilität, um beispielsweise Druckschwankungen standzuhalten. Ebenfalls gezeigt ist das Anregungslicht 29, das nach dem Passieren des Trägers 27 auf das in der Polymermatrix 23 immobilisierte Fluorophor 25 trifft und die von diesem emittierte Fluoreszenzstrahlung 31. Die Fluoreszenzantwort wird durch den Analyten 33 (z.B. Sauerstoff) beeinflusst.

Es ist auch möglich, den Träger 27 gleichzeitig als Deckschicht zu verwenden. Dies bedingt aber, dass in diesem Fall der Träger der zu messenden Probe (dem Medium 17) zugewandt ist. Damit muss der Träger für den Analyten permeabel, jedoch für Licht vorteilhafterweise undurchlässig sein.

**Beispiel 1 (Topas, Ethylen-Norbornene-Coplymere)**

22g Topas 6017S-04 wurden in 275g Chloroform gelöst. Dieser Lösung wurden anschliessend 0.5g Pt(II) meso-Tetra(pentafluorophenyl)porphine (CAS-No.: 109781-47-7) zugesetzt. Nach kurzem Aufheizen und Abkühlen war die Lösung bereit für die Filmbildung.

Die Filmbildung kann alternativ nach allen gängigen Methoden für die Filmbildung aus Lösungsmitteln erfolgen. In einer ersten Methode wurden die Filme mittels Spin-Coating erhalten.

Ein 5x5 cm$^2$ Glaswafer (Durchmesser = 1 mm) wurde gut gereinigt und mit einer alkoholischen Lösung von Glycidyloxypropyl-trimethoxysilan zur besseren Haftung der Polymerschicht vorbehandelt.

Anschliessend wurden die Spin-Coater (Lot Oriel, Modell SCI-20) mit den Wafern beladen. Zur gleichmässigeren Filmbildung mussten die Wafer voll mit Polymerlösung bedeckt werden, da das sehr flüchtige Lösungsmittel Chloroform zur schnellen Filmbildung neigt, was das Ausspinnen aus dem Waferinneren massiv erschwerte. Die den ganzen Wafer bedeckende Lösung wurde anschliessend mit einer Umdrehungszahl von lediglich 300 UpM abgespinnt (Beschleunigung = 300 UpM/Sec; Abspinnrate = 300 UpM). Dabei wird recht viel an teurer, Platin-Fluorophore enthaltender Polymerlösung abgespinnt und verbraucht. Um trotzdem einen ökonomischen Filmbildungsprozess zu erhalten, wurde die abgespinnte Lösung vorzugsweise aufgefangen und wieder gelöst (recycliert).

Mit dieser Methode konnten Filmdicken von ca. 5 μm $\pm$ 0.2 μm erhalten werden.

Um der Filmbildungsneigung des Lösungsmittels entgegenzuwirken, wurden auch Versuche unternommen, die Filme in einer lösungsmittelgesättigten Atmosphäre innerhalb einer Kammer zu bilden. Dadurch konnten Lösungen durch Auftragung von 3 ml Polymerlösung aus der Wafermitte verspinnt werden. Hierbei resultierten Wafer mit ca. 5.3 μm-Dicke, allerdings mit einer etwas grösserer Filmdickenvarianz.

Alternativ wurden die Wafer in einem Dip-Coating- oder Tauchbadverfahren hergestellt. Die Wafer wurden in die Polymerlösungen mit den Fluorophoren getaucht und anschliessend zur Trocknung der Membranschicht aufgehängt. Ein Problem dieser Methode bestand darin, dass sich die Lösung ca. 2-3 mm am unteren Waferrand ansammelte, was dort zu verstärkten Filmdicken führte. Diese Teile der Wafer wären beim anschliessenden "Slicen" der Wafer sicher Abfall. Mit dieser Methode resultierten etwas ungleichmässigere Schichtdicken um die 6 μm, wobei die Schichtdicke gegen den unteren Waferrand leicht zunahm.

In einer dritten Methode wird die Polymerlösung mittels eines Spray-Coatings auf die Wafer gesprüht. Die Wafer werden mit einigem Abstand bis unter die Fliessgrenze der Lösung besprüht. Für etwas dickere Schichtdicken und erhöhte Fliessgrenzen bzw. besserer Standfestigkeit kann die Polymerlösung auch leicht konzentrierter angesetzt werden, was deren Viskosität schnell erhöht. Mit dieser Methode konnten die gleichmässigsten und dünnsten Filme mit Schichtdicken von z.B. 3.1 μm $\pm$ 0.1 μm hergestellt werden.

In einer letzten und vierten Methode wurden Filme mittels einer Rakelmaschine in sogenannter Dickfilmtechnik hergestellt. Die Rakelmaschine wurde auf einen Schlitzabstand (Abstand Rakel zu Waferunterlage) von 60 μm eingestellt und es wurden Filme gezogen. Anschliessend liess man das Lösungsmittel abdampfen. Resultierte Filme waren leicht wellig und wiesen eine Schichtdicke von ca. 5.1 µm ± 0.4 µm auf.

Schichtdicken sind insofern wichtig, als dass sie zwei wichtige Grössen beim optischen Messen des Sauerstoffgehalts mittels Fluoreszenzlöschung beeinflussen. Erstens bestimmt die Schichtdicke die Emissionsrate bzw. Reflexionsrate und damit die Intensität der Fluoreszenzantwort und zweitens ist sie massgeblich für die Ansprechzeit des Messsystems.

Für eine gute Ansprechzeit sind möglichst dünne Filme vorteilhaft, damit der Sauerstoff einen möglichst geringen Diffusionsweg zur Löschung der Fluoreszenz zurücklegen muss. Die Sauerstoffdiffusionsrate durch das Polymer ist die zweite Grösse, welche die Ansprechzeiten der Sauerstoffmembranen beeinflusst. Diese sollte möglichst hoch sein und ist materialspezifisch. Für Topas-Qualitäten liegt sie im Bereiche von 250 (für Topas 5013X14 Tg = 136°C) bzw.

$$280 \ cm^3 * 100 \ \mu m/(m^2 * Tag * bar).$$

Andererseits ist eine bestimmte Mindestintensität für die Fluoreszenzantwort notwendig. Ferner waschen die Fluorophore z.B. beim Autoklavieren auch weniger schnell aus, wenn die Schichtdicken grösser sind. Um möglichst grosse Fluoreszenzantworten bei gleichzeitig dünnen Schichten zu erhalten, sollte die Konzentration an Fluorophoren im Polymer und in der Lösung also gross sein, gleichzeitig aber klein genug sein, um die Polymereigenschaften (insbesondere Tg, thermische Eigenschaften und Diffusionseigenschaften durchs Polymer) nicht ungünstig zu beeinflussen. Mit einer Fluorophorkonzentration von 2.3% g/g Polymer konnten dabei gute Resultate erzielt werden.

Anstelle des sehr giftigen Lösungsmittels Chloroform kann auch das Lösungsmittel Cyclohexan verwendet werden. Das Polymer Topas löst sich sogar noch besser in diesem Lösungsmittel und ein Kaltlösen des Polymers ist in Konzentrationen bis zu 10% g Polymer/g möglich. Allerdings ist die Löslichkeit für den in diesem Beispiel gewählten Fluorophor etwas schlechter, so dass die Lösung vor der Filmbildung zwingend aufgeheizt und wieder abgekühlt werden musste. Bei der Lösungsmittelwahl ist in jedem Fall zu beachten, dass sowohl das Polymer wie auch das Fluorophor ausreichende Löslichkeiten zeigen müssen. Ferner sollte das Lösungsmittel einen möglichst tiefen Siedepunkt aufweisen, damit es auch wieder aus der Polymermatrix entfernt werden kann. Das Entfernen des Lösungsmittels muss vorsichtig ablaufen, um Blasenbildung im Polymer zu vermeiden. Deshalb wurden hergestellte Filme vor dem Trocknen im Vakuumtrockenschrank zur Genüge an der Luft bei Raumtemperatur vorgetrocknet.

Nach der Filmbildung und ca. 24-stündigem Trocknen an der Luft wurden die Wafer mit den Polymerschichten während 1 h bei 120°C im Vakuumtrockenschrank getrocknet. Hierbei verteilt sich das Fluorophor im Polymer noch gleichmässiger und die Fluoreszenz sowie die Farbintensität des Fluorophors wurden dabei, aufgrund der Wechselwirkung mit dem Polymer, noch intensiver.

Die so hergestellten Schichten wurden anschliessend alternierend mit schwarzen, porösen Teflonschichten (Dicke 5 µm) oder aber mit weissen Siliconschichten als optische Abdeckung versehen, um das Messsystem vor Fremdlicht und Fluoreszenz aus dem Messmedium zu schützen. Um schnelle Ansprechzeiten zu erhalten und um auf eine Schichtdickenvergrösserung durch zusätzliche weisse Siliconschichten zu verzichten und trotzdem gute Remissionswerte zu erzeugen, kann die Sensorschicht auch mit einem weissen, porösen Papier oder Fliessblatt abgedeckt werden.

Mit diesen Sensoren oder Spots wurden anschliessend, nach Ermittlung der Stern-Vollmer-Kennlinie, Sauerstoffmessungen sowohl in der Gasphase wie auch in Flüssigkeiten durchgeführt. Angeregt wurden die Fluorophore mittels einer grünen LED und entsprechenden optischen Filtern bei ca. 505 nm mittels eines sinusförmigen Anregungssignals. Eine Phasenverschiebung wurde anschliessend aus der Fluoreszenzantwort bei 650 nm ermittelt.

Das UV/VIS-Spektrum des Fluorophors Pt(II) meso-Tetra(pentafluorophenyl)porphine (CAS-No.: 109781-47-7) zeigt ein erstes Absorptionsmaximum bei ca. 492 nm und zwei weitere schwächere Maxima bei ca. 507 nm und ca. 540 nm.

Das Spektrum des immobilisierten Fluorophors änderte sich kaum. Störende Matrixeffekte bzgl. der Lumineszenz konnten also bei Immobilisierung des Fluorophors Pt(II) meso-Tetra(pentafluorophenyl)porphine nicht festgestellt werden.

Folgende Ansprechzeiten wurden für die so hergestellten Sauerstoffmembranen vor und nach dem Autoklavieren in der Gasphase sowie in Lösung ermittelt:

| Filmbildungsmethode | Schicht-Schichtdicke | optische Abdeckung | | | | Ansprechzeit / Photomultipliercounts | | | |
|---|---|---|---|---|---|---|---|---|---|
| | | Teflon 5$\mu$m | Silicon 5$\mu$m | Silicon 9.7$\mu$m | Silicon 16$\mu$m | vor Autoklavieren | | nach 30 Autoklavierzyklen 130°C 30Min. | |
| | | | | | | Ansprechzeit */**(s) | counts in $O_2$ | Ansprechzeit */** (s) | counts in $O_2$ |
| Spin-Coating | 5 $\mu$m | X | | | | 20/45 | 17000 | 22/46 | 15000 |
| Spin-Coating | 5 $\mu$m | | X | | | 31/59 | 19000 | 30/61 | 17500 |
| Spin-Coating | 5 $\mu$m | | | X | | 42/71 | 19000 | 40/73 | 18000 |
| Spin-Coating | 5 $\mu$m | | | | X | 55/92 | 19000 | 55/95 | 18000 |
| Dip-Coating | ca. 6 $\mu$m | X | | | | 25/48 | 18000 | 30/50 | 15500 |
| Dip-Coating | ca. 6 $\mu$m | | X | | | 35/62 | 20000 | 36/64 | 18000 |
| Dip-Coating | ca. 6 $\mu$m | | | X | | 45/80 | 20000 | 50/85 | 18000 |
| Dip-Coating | ca. 6 $\mu$m | | | | X | 60/122 | 20000 | 68/142 | 18500 |
| Spray-Coating | 3.1 $\mu$m | X | | | | 15/38 | 12000 | 20/41 | 11000 |
| Spray-Coating | 3.1 $\mu$m | | X | | | 24/55 | 13500 | 28/60 | 12000 |
| Spray-Coating | 3.1 $\mu$m | | | X | | 38/67 | 13500 | 41/69 | 12500 |
| Spray-Coating | 3.1 $\mu$m | | | | X | 50/88 | 13500 | 51/86 | 12500 |
| Rakelmethode | 5.1 $\mu$m | X | | | | 22/46 | 17000 | 22/49 | 15000 |
| Rakelmethode | 5.1 $\mu$m | | X | | | 31/61 | 19000 | 34/66 | 17000 |
| Rakelmethode | 5.1 $\mu$m | | | X | | 45/75 | 19000 | 50/83 | 17500 |
| Rakelmethode | 5.1 $\mu$m | | | | X | 59/104 | 19000 | 101/114 | 18000 |

*/**Ansprechzeiten $t_{98\%}$ wurden ermittelt a.) aus Mediumswechsel Luft $\rightarrow$ Stickstoff; Stickstoff $\rightarrow$ Luft und b.) aus Mediumswechsel sauerstoffgesättigtes Wasser $\rightarrow$ sauerstofffreies Wasser (Wasser + Na-Bisulphit + Spur Cobalt).

Eine vernünftige, für das verwendete Messgerät noch aufzulösende Anzahl an Fluoreszenzcounts beträgt ca. 5000 counts. Wird dieser Wert unterschritten, ist der Messspot oder Sensor zu ersetzen.

Die Ansprechzeiten nahmen durch 30 Autoklavierzyklen nur unwesentlich zu, allerdings nehmen diese um so mehr zu, je dicker die Schichten und insbesondere auch die Siliconschichten sind. Es konnten also Messspots mit guten, für Sterilisationsprozesse in der Food- und Pharmaindustrie genügend schnellen Ansprechzeiten, auch nach mehreren Autoklavierzyklen, hergestellt werden. Auch nahm die Intensität der ermittelten Fluoreszenz der Spots durch das Autoklavieren (in Phosphatpuffer) kaum ab, die Fluorophore wurden also kaum ausgewaschen und sind durch die thermische Behandlung kaum ausgebleicht. Dass der Farbstoff selbst temperaturresistent ist, ist bekannt. Die gute Resistenz gegen Auswaschen wird dem hohen Tg des immobilisierenden Polymers zugeschrieben.

**Beispiel 2 PMP (TPX®): Fluorophorimmobilisierung in der Schmelze**

Als Beispiel wird die Immobilisierung eines Fluorophors in PMP beschrieben, welches sich für diese Methode der Immobilisierung besonders gut eignet, da dessen Schmelzpunkt bei ca. 240°C - 250°C liegt. Alternativ würde sich für diese Methode der Immobilisierung z.B. auch das Polymer "Poly(alpha-methylstyrene)" mit Tm = 210°C eignen (Tg = 168°C, Tg und Schmelztemperatur stark von Mw abhängig).

20 g Poly-4methyl-1-penten (CAS-No.: 25068-26-2; PMP) mit MFI = 70g/10Min. (z.B. PMP ex Scientific Poly- mers Inc. Sp$^2$, Ontario) werden in einer geschlossenen Apparatur unter Stickstoff gesetzt, um so eine thermische Zersetzung und Oxidation beim Schmelzen des PMP möglichst zu vermeiden. Anschliessend wird der Kolben mit Inhalt auf eine Temperatur von 250°C aufgeheizt. Der Schmelze wurden dann unter Rühren 0.112g Pt(II) meso-Tetra(pentafluorophenyl)porphine zugesetzt (Fb.-Konzentration = 0.56% g/g Polymer). Nach 1-minütigem Rühren wurde die Polymerschmelze abgekühlt. Aus dem resultiertem Polymerblock wurden anschliessend Filme mit Dicken von ca. 15 μm herausgeschält und durch Walzen bei 50°C vergütet (Temperatur knapp oberhalb des Tg = 18-40°C).

Alternativ kann der Farbstoff auch in einem Mini-Extruder mit dem Polymer vermischt werden. Es ist jedoch darauf zu achten, dass das Fluorophor nicht zu lange den hohen Temperaturen ausgesetzt bleibt und Temperaturen von > 250°C möglichst nicht, und wenn notwendig nur kurz überschritten werden. Aus diesem Extruder können anschliessend Filme extrudiert werden, welche bei entsprechender Einrichtung direkt zur gewünschten Filmdicke verstreckt werden können.

So geschälte oder extrudierte Filme können nur schwer direkt auf autoklavierbare, transparente Wafer (Glaswafer) aufgebracht werden, sondern müssen, z.B. mit einem dünnen und transparentem Siliconfilm auf Glassubstrate aufgeklebt werden. Zur besseren Haftung des PMP-Films auf der Glasoberfläche wird dessen Oberfläche vorab vorzugsweise mittels eines oxidativen Plasmas hydrophilisiert. Die optische Abdeckung kann anschliessend analog den Sensorspots aus Beispiel 1 aufgetragen werden.

Die Spots wurden analog Beispiel 1 vermessen. Aufgrund der dickeren Schichtdicken resultierten Ansprechzeiten im Bereiche von 60 Sekunden (in der Gasphase) und 2.5 Minuten (in der Flüssigphase). Diese sind sicher durch das Prozessieren von dünneren Schichten weiter optimierbar. Die Spots konnten ebenfalls autoklaviert (130°C, 30Min.) werden, wobei die Anzahl an counts (Intensität des fluoreszierenden Lichtes) nach einem ersten Zyklus von ca. 8000 auf 6000 abnahm, anschliessend während der nächsten 30 Zyklen aber nur noch unwesentlich auf ca. 5500 counts abnahm. Obwohl PMP eine Glasumwandlungstemperatur (T$_g$) weit unter 140°C aufweist, scheint die Fluorophordiffusion aus der Polymermatrix bzw. Fluorphorauswaschung nur langsam abzulaufen. So hergestellte Sensorspots sind also mind. für 30 Autoklavierzyklen bei 130°C geeignet und die Sensorfolien nehmen durch den heissen Wasserdampf keinen Schaden. Durch Verwendung höherer Fluorophorkonzentrationen beim Immobilisieren kann die Anzahl möglicher Autoklavierzyklen vor einem Sensorwechsel sogar nochmals erhöht werden. Nichtsdestotrotz sind diese optochemischen Sensoren sicher weniger langlebig als die optochemischen Sensoren, hergestellt aus COC (cyclische Olefin-Copolymere, Topas) und könnten als beschränkt haltbare "Disposables" zu verwenden sein.

**Beispiel Nr. 3: Optochemischer Sensor mit polymeren Wafern**

Ein weiteres besonders bevorzugtes Beispiel für einen erfindungsgemässen optochemischen Sensor beinhaltet die Verwendung von polymeren Wafern als Träger. Hierdurch lässt sich die Haftung der Polymermatrix mit dem immobilisierten Fluorophor stark erhöhen, insbesondere nach Alterung bzw. einer Vielzahl von Autoklavierzyklen, wie auch die Übereinstimmung der Hydrophilie zwischen Substrat (Träger) und dem aufgespinnten Lösungsmittel (mit dem gelösten Polymer und Fluorophor), was die Benetzung des Wafers während des Spin-Coating-Prozesses und somit die Filmuniformität massgeblich beeinflusst.

Polymere Wafer sind wesentlich hydrophober als Glasoberflächen und der Hydrophiliematch des Lösungsmittels (Chloroform oder Cyclohexan) zum Wafersubstrat ist wesentlich besser, was eine bessere Benetzung des Wafers und somit homogenere Filmoberflächen mit geringerer Topografie zulässt. Auch ist die Haftung der aufgespinnten Polymerfilme auf den polymeren Wafern besser als auf silanisierten Glasoberflächen. Auf einen Layeraufbau durch Zusammenkleben der einzelnen Layer kann vollends verzichtet werden.

Die verbesserte Haftung beruht einerseits sicher auf einem verbesserten Hydrophiliematch zwischen Polymerfilm und darunter liegendem Wafer, andererseits wohl auf der Tatsache, dass die Lösungsmittel diese Wafer teilweise oberflächlich angreifen und die oberste Polymerschicht des Wafers anzulösen vermögen. Beim Abdampfen des Lösungsmittels verkeilen dann die angelösten Polymerketten des Wafers mit den noch in Lösung befindlichen Polymerketten des aufgebrachten Films, was zu einer enormen Haftungssteigerung führt, welche unendlich autoklavierbar ist. Mit folgendem Vorgehen konnten optimale Spots erhalten werden:

Polymerlösung:

22g Topas 6015S-04 werden in 178g Cyclohexan unter Rückfluss gelöst. Nach Abkühlen wurden der Lösung 0.46g Pt(II) meso-Tetra(pentafluorophenyl)prophine zugesetzt. Zur besseren Lösung des Fluorophors musste die Lösung nochmals kurz zum Sieden gebracht werden.

Die Filmbildung erfolgte anschliessend mittels des Spin-Coating-Verfahrens auf polymeren Wafern, wie semikristallines PA (z.B. der EMS-Chemie Typ TR XE 3942 Tg = 190°C; max. Gebrauchstemperatur = 160°C, autoklavierbar bei 130°C; Dicke der Wafer 0.8 mm) oder Topas selbst (Typ 6015S-04; Dicke 0.8 mm $\pm$ 1 mm; max. Gebrauchstemp. > 145°C). Dabei zeigten sich folgende Effekte:

Die aufgespinnte Lösung verteilte sich besser und gleichmässiger auf der Oberfläche und führt zu gleichmässigeren Filmen als beim Ausspinnen auf unbehandelten Glaswafern oder aber auf silanisierten Glaswafern.

Topas wird durch das aufgebrachte Cyclohexan angelöst. Zu langes Verweilen der Lösung führt zu Quellung des Wafers und im Extremfall zu Trübung des Wafers durch sich bildende Schlieren. Auf Topas-Wafer aufgebrachte Cyclohexanlösungen sind also möglichst schnell abzuspinnen. Aufgrund des Anlösens wird aber für den aufgespinnten Film eine maximale Haftung erzielt. Mit Topas-Wafern, deren Lösung unmittelbar nach dem Aufbringen abgespinnt wurde, konnten durchsichtige klare Spots aufgebaut werden. Auch konnte unter LM-gesättigter Atmosphäre die Lösung von der Mitte heraus verspinnt werden, obwohl Polymerlösungen mit Cyclohexan schnell zu Filmbildung an der Oberfläche neigen (Siehe auch Bsp. 1). Dadurch kann eine wesentliche Einsparung der teuren Polymerlösung mit dem teuren Fluorophor erzielt werden, da für eine Filmbildung weniger Lösung verbraucht und abgespinnt wird.

Durch die bessere Übereinstimmung der Hydrophilie zwischen dem Lösungsmittels und dem Wafer, ist die Waferbenetzung wesentlich besser und schneller, so dass sich an der Oberfläche bildende Filme nicht so stark in Topographieunebenheiten auswirken.

Polyamid-Wafer (PA-Wafer) sind wesentlich beständiger gegenüber Cyclohexan und lassen sich durch letzteres allenfalls anlösen. Die Verweildauer von Cyclohexan auf dem PA-Wafer ist daher nicht kritisch. Von den Polymer-Materialien weist vor allem COC/Topas eine sehr gute optische Transparenz von im unteren Wellenlängenbereich auf, was insbesondere bei kurzen Anregungswellenlängen der Fluorophore (bis 400nm) wichtig ist. Dadurch vergrössert sich die Fluoreszenzausbeute, da die Absorption der Fluoreszenz im Trägermaterial des optochemischen Sensors geringer ist.

Nach Trocknung an der Luft und im 120°C-Ofen wurden die Wafer einem Initialen Autoklavierzyklus unterzogen. Dabei verstärkte sich die Farbtiefe des immobilisierten Fluorophors nochmals und das Fluorophor löst sich optimal im Polymer.

Nach Applikation einer ca. 6 $\mu$m optischen Abdeckung aus weissem Silicon wurden die Spots analog dem Bespiel 1 vermessen. Es resultierten Ansprechzeiten von ca. 30 Sekunden in der Gasphase und ca. 80 Sekunden in kondensierten Phasen.

Mit ca. 14000 counts (in Luft) für die Spots auf Topas-Wafern war die Fluoreszenzantwort genügend hoch, während die Spots auf PA-Wafern lediglich ca. 9000 counts zeigten. Dies liegt an der geringeren Transparenz der PA-Wafer.

Die Spots wurden anschliessend Alterungen und vor allem CIP-Zyklen unterzogen, wobei sowohl mit Salpetersäure wie auch mit Natronlauge gereinigt wurde (70h 5% NaOH 80°C, 70h HNO3 5% 80°C). Dabei zeigte sich die hervorragende Laugen - und Säurestabilität des Polymers COC. Während die PA-Wafer die Laugenprozedur unbeschadet überstanden, vergilbten die PA-Wafer in Salpetersäure massiv und anschliessende Sensorcharakteristik ging wegen der erhöhten Licht-Absorptionsrate des vergilbten PA-Wafers, teilweise verloren. Im Gegensatz dazu überstanden die COC-Wafer die CIP-Prozeduren (sowohl in Lauge wie auch in der Säure) ohne Verlust derer Transmission und ohne Verfärbungen.

**Beispiel 4: Applikation auf Lichtleiter**

In einem weiteren Beispiel wird der Sauerstoffsensitive Polymerfilm direkt auf Glaslichtleitern aufgebracht. Dabei ist darauf zu achten, dass das Polymer, in dem das Fluorophor immobilisiert ist, über einen höheren Brechungsindex verfügt, als der darunterliegende Lichtleiter, damit es am Glas/Polymerinterface nicht zur Totalreflektion kommt und der Farbstoff im Polymer durch Licht überhaupt angeregt werden kann. Glaslichtleiter verfügen über einen Brechungsindex von ca. 1.46. Das heisst, alle Polymere mit Brechungsindex grösser 1.46, die über die nötigen thermischen und optischen Eigenschaften verfügen, sind für diese Art der Applikation denkbar. Für die Applikation auf Lichtleiter sind insbesondere all jene Polymere geeignet, die in jüngster Zeit als polymere Lichtwellenleiter mit hohem Brechungsindex entwickelt wurden. Zu diesen gehört z.B. das Poly(pentabromophenyl acrylate - co - glycidyl methacrylate) (Tg. = 162°C, löslich in Chloroform, Fluka Art.-No.: 591408).

Vorgehen:

Vom Glaslichtleiter wurde über eine Strecke von ca. 3 mm die Kunststoff-Verkleidung entfernt. Das darunterliegende Kern-Material wurde anschliessend gut gereinigt und mit einer alkoholischen Lösung von Gylcidylpropyl-trimethoxysilan zur besseren Haftung der Polymerschicht vorbehandelt.

Anschliessend wurde die Spitze mittels Dip-Coating in einer Polymerlösung sehr niedriger Viskosität (Polypentabromophenyl acrylate - co -glycidyl methacrylate gelöst in Chloroform) beschichtet. Der durchs Dip-Coating resultierende Polymertropfen am Ende der Glasfaser wurde mittels eines Messers abgeschnitten und das anschliessend freiliegende Faserende wurde mit Silber als Reflektor beschichtet. Anschliessend wurde das ganze Faserende (Spitze mit Silberbelag incl. 3 mm-Polymerschicht mit immobilisiertem Fluorphor) mit einer sauerstoffpermeablen Verkleidung (Cladding) versehen.

Wichtig bei dieser Verkleidung ist, dass diese wiederum den kleineren Brechungsindex aufweist als die darunterliegende Polymerschicht, damit das Licht am Polymer/Verkleidungs-Interface totalreflektiert wird und kein Licht verloren geht. Ein Beispiel einer derartigen sauerstoffpermeablen Verkleidung ist ein weisses RTV-Silicon (Silicon aus Vinyl-terminiertem Poly(dimethylsiloxan)), wie es in den Beispielen 1-3 bereits als optische Abdeckung verwendet wurde. Das Silicon ist hierbei vorzugsweise weiss, um die Einkoppelung von störendem Fremdlicht in den Lichtleiter zu verhindern. Mögliche Produkte für eine solche Verkleidung sind die Siliconprodukte der Gelest Inc. (Gelest OE™41/42/43) mit Brechungsindixes von 1.41 bis 1.43 gefüllt mit Titandioxid oder ein regulärer, niedrigviskoser RTV-Silicon der Dow-Corning, z.B. dem RTV 732 "weiss". Letzteres Silicon ist als weisses Silicon erhältlich und von der FDA für den Kontakt mit Lebensmitteln zugelassen.

Applizierte Polymerlösung:

1 g Polypentabromophenyl acrylate - co -glycidyl methacrylate wurden in 15ml Chloroform gelöst. Der Chloroformlösung wurden anschliessend 0.0253g Pt(II) meso-Tetra(pentafluorophenyl)prophine zugesetzt und gut gelöst. Hierfür wurde unter Rückfluss kurz aufgeheizt. In diese Lösung wurde anschliessend zum Dippen der vorbehandelten Glaswellenleiter verwendet.

Resultat:

Wegen des Dippens in einer relativ viskosen Siliconlösungen wurden die optischen Schutzschichten bzw. die Claddings für die Lichtwellenleiter relativ dick, was sich in den Ansprechzeiten der so hergestellten Sensoren niederschlug. Mit dem Gelest-Produkt konnten wegen der niedrigeren Viskosität die dünneren Verkleidungen (Claddings) erhalten werden, was zu schneller reagierenden Sensoren führte, als die mit Silicon 732 "weiss" beschichteten Lichtwellenleiter. Hingegen ist der mit Gelest-Coating beschichtete Glasleiter empfindlicher gegenüber Fremdlicht, da er $TiO_2$-frei und damit transparent, wie von Gelest erhalten, appliziert wurde. Für weitere Experimente sollte eine weisse $TiO_2$-Schicht als Lichtbarriere eingeführt werden. Aufgrund der Transparenz des Materials mussten die Messungen unter Ausschluss von Fremdlicht durchgeführt werden. Mit beiden Arten von optischer Abdeckung konnten Sensoren mit einem ausreichenden Sensorsignal erhalten werden.

**Patentansprüche**

1.  Optochemischer Sensor (9) zur Messung von gasförmigen oder gelösten Analyten umfassend ein in einer Polymermatrix (23) immobilisiertes Fluorophor (25), wobei die Polymermatrix (23) ein Polymer mit einem nicht-aromatischen Rückgrat umfasst ausgewählt aus der Gruppe bestehend aus Poly(4-methyl-1-penten), Ethylen-Norbornen Copolymer, cyclische Olefin Polymere, Poly(n-methylmethacrylimid), Poly(N-Vinylphthalimid), Poly(2-Vinylthiophen), Poly(pentachlorophenyl methacrylat), Poly(pentachlorophenyl methacrylat-co-glycidyl methacrylat) 10mol% Glycidyl methacrylat, Poly(pentabromophenyl acrylat), Poly(pentabromophenyl acrylate-co-glycidyl methacrylat) 10mol% Glycidyl methacrylat, Poly(pentabromobenzyl acrylat), Poly(pentabromobenzyl methacrylat), Poly(pentabromobenzyl methacrylate-co-glycidyl methacrylat) 10mol% Glycidyl methacrylat, Poly(4-Vinylpyridin), Poly(2,6-dichlorostyren), Poly(1-naphthyl methacrylat), Poly((octahydro-5-(methoxycarbonyl)-5-methyl-4,7-methano-1H-indene-1,3-diyl)-1,2-ethanediyl), Poly(4-Vinylbiphenyl), Poly(4-vinylphenol).

2. Optochemischer Sensor (9) gemäss Anspruch 1, wobei das Polymer ausgewählt wird aus der Gruppe bestehend aus Poly(4-methyl-1-penten) und Ethylen-Norbornen Copolymer.

3. Optochemischer Sensor (9) gemäss Anspruch 2, wobei das Polymer ein Ethylen-Norbornen Copolymer ist.

4. Optochemischer Sensor (9) gemäss einem der vorangehenden Ansprüche, wobei die Polymermatrix (23) auf einem Träger (27) aufgebracht ist.

5. Optochemischer Sensor (9) gemäss Anspruch 4, wobei der Träger (27) ein Material ausgewählt aus der Gruppe bestehend aus Polyester, amorphes oder teilkristallines Polyamid, Acrylat, Polycarbonat, Ethylen-Norbornen Copolymere (Cyclische Olefin-Copolymere) und Glas, umfasst.

6. Optocchemischer Sensor (9) gemäss Anspruch 5, wobei der Träger (27) Ethylen-Norbornen Copolymere (Cyclische Olefin-Copolymere) umfasst.

7. Optochemischer Sensor (9) nach einem der Ansprüche 1 bis 3, wobei die Polymermatrix (25) direkt auf einem Lichtleiter angeordnet ist.

8. Optochemischer Sensor (9) gemäss einem der Ansprüche 1 bis 7, wobei der Analyt gasförmiger oder gelöster Sauerstoff ist.

9. Optochemischer Sensor (9) gemäss gemäss einem der Ansprüche 1 bis 7, wobei der Analyt gasförmiges oder gelöstes $SO_2$, gasförmiges oder gelöstes $H_2O_2$, Schwefeldioxid oder Stickoxid ist.

10. Verfahren zur Herstellung eines optochemischen Sensors (9) mit einem in einer Polymermatrix immobilisierten Fluorophor, insbesondere nach einem der vorangehenden Ansprüche, wobei

a. das die Polymermatrix (23) bildende Polymer geschmolzen wird;
b. das Fluorophor (25) unter Rühren zu der in Schritt a) gebildeten Polymerschmelze zugegeben wird; und
c. aus der in Schritt b) gebildeten, das Fluorophor (3) enthaltenden Polymerschmelze ein Film gebildet wird und der Film anschliessend abgekühlt wird.

11. Verfahren gemäss Anspruch 9, wobei der Film auf dem Träger (27) gebildet wird oder auf diesen aufgebracht wird.

1

19

3

15

5

13

7

11

21

9

17

Fig.1

Fig.2

33

$O_2$

$O_2$

$O_2$

$O_2$

$O_2$

$O_2$

9

$O_2$

$O_2$

$O_2$

$O_2$

25

$O_2$

23

27

29

31

Fig.3

**Europäisches Patentamt**

# EUROPÄISCHER RECHERCHENBERICHT

Nummer der Anmeldung

EP 07 11 3709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 387 525 A (MUNKHOLM CHRISTIANE [US]) 7. Februar 1995 (1995-02-07)<br><br>* Spalte 12, Zeile 43 - Spalte 14, Zeile 25 *<br>* Beispiel 8 *<br>----- | 1,2,4,5, 7,8,10, 11 | INV. G01N31/22 G01N21/64 |
| X | WO 2004/027412 A (UNIV JOHNS HOPKINS [US]; SOUTHARD GLEN E [US]) 1. April 2004 (2004-04-01)<br>* Absätze [0022], [0025], [0026] *<br>* Seite 11, Zeilen 18-22 *<br>* Absatz [0047] *<br>* Ansprüche 66-70 *<br>* Seite 12, Zeilen 23,24 *<br>* Seite 13, Zeile 20 *<br>----- | 1,2,4,5, 7,8,10, 11 | |
| Y | US 2003/224526 A1 (LAWRENCE DAVID S [US] ET AL) 4. Dezember 2003 (2003-12-04)<br>* Absätze [0031], [0041], [0042] *<br>* Ansprüche 1-3 *<br>----- | 1,2,4,5, 7-11 | RECHERCHIERTE SACHGEBIETE (IPC) |
| Y | MALHOTRA ET AL: "Prospects of conducting polymers in biosensors" ANALYTICA CHIMICA ACTA, ELSEVIER, AMSTERDAM, NL, Bd. 578, Nr. 1, 18. September 2006 (2006-09-18), Seiten 59-74, XP005655538 ISSN: 0003-2670<br>* Seiten 64-66 *<br>----- | 1,2,4,5, 7-11 | G01N |
| A | US 2004/063146 A1 (SAYRE CURTIS [US] ET AL) 1. April 2004 (2004-04-01)<br>* das ganze Dokument *<br>----- | 1-11 | |

Der vorliegende Recherchenbericht wurde für alle Patentansprüche erstellt

| Recherchenort | Abschlußdatum der Recherche | Prüfer |
|---|---|---|
| München | 8. Januar 2008 | Michalitsch, Richard |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 07 11 3709

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2008

| Im Recherchenbericht angeführtes Patentdokument | Datum der Veröffentlichung | Mitglied(er) der Patentfamilie | Datum der Veröffentlichung |
|---|---|---|---|
| US 5387525 A | 07-02-1995 | AT 148788 T | 15-02-1997 |
| | | AU 687854 B2 | 05-03-1998 |
| | | AU 7391094 A | 22-03-1995 |
| | | CA 2170592 A1 | 09-03-1995 |
| | | DE 69401717 D1 | 20-03-1997 |
| | | DE 69401717 T2 | 22-05-1997 |
| | | DK 716740 T3 | 17-03-1997 |
| | | EP 0716740 A1 | 19-06-1996 |
| | | ES 2099626 T3 | 16-05-1997 |
| | | HK 1000100 A1 | 21-11-1997 |
| | | WO 9506871 A2 | 09-03-1995 |
| | | JP 2866201 B2 | 08-03-1999 |
| | | JP 9500685 T | 21-01-1997 |
| | | KR 171534 B1 | 01-05-1999 |
| | | PL 313265 A1 | 24-06-1996 |
| | | US 5506148 A | 09-04-1996 |
| WO 2004027412 A | 01-04-2004 | AU 2003270782 A1 | 08-04-2004 |
| | | CA 2502683 A1 | 01-04-2004 |
| | | EP 1546706 A1 | 29-06-2005 |
| US 2003224526 A1 | 04-12-2003 | KEINE | |
| US 2004063146 A1 | 01-04-2004 | AU 2003272430 A1 | 19-04-2004 |
| | | TW 229185 B | 11-03-2005 |
| | | WO 2004029596 A1 | 08-04-2004 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6432363 B

- WO 9526501 A

**In der Beschreibung aufgeführte Nicht-Patentliteratur**

- **Y. AMAO et al.** *Analytica Chimica Acta,* 2000, vol. 407, 41-44
- **Y. AMAO et al.** *Analytica Chimica Acta,* 2000, vol. 421, 167-174

- **Y. AMAO et al.** *Analytica Chimica Acta,* 2001, vol. 445, 177-182
- **M. FLORESCU ; A. KATERKAMP.** *Sensors and Actuators B,* 2004, vol. 97, 39-44